(19) **Europäisches Patentamt / European Patent Office / Office européen des brevets**

(11) **EP 4 218 983 A1**

(12) # EUROPEAN PATENT APPLICATION
published in accordance with Art. 153(4) EPC

(43) Date of publication:
02.08.2023 Bulletin 2023/31

(21) Application number: 21872642.0

(22) Date of filing: 28.09.2021

(51) International Patent Classification (IPC):
*B01D 39/16* (2006.01)   *B01D 63/14* (2006.01)
*B01D 69/00* (2006.01)   *B01D 71/36* (2006.01)
*D04H 1/4218* (2012.01)

(52) Cooperative Patent Classification (CPC):
**B01D 39/16; B01D 63/14; B01D 69/00;**
**B01D 71/36; D04H 1/4218**

(86) International application number:
**PCT/JP2021/035724**

(87) International publication number:
**WO 2022/065517 (31.03.2022 Gazette 2022/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 28.09.2020 JP 2020162643

(71) Applicant: NITTO DENKO CORPORATION
**Ibaraki-shi**
**Osaka 567-8680 (JP)**

(72) Inventors:
• **IKEMURA, Yusuke**
 **Ibaraki-shi, Osaka 567-8680 (JP)**
• **MORI, Masaaki**
 **Ibaraki-shi, Osaka 567-8680 (JP)**
• **MASAKI, Shunsuke**
 **Ibaraki-shi, Osaka 567-8680 (JP)**
• **SATO, Go**
 **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **AIR FILTER FILTERING MEDIUM, FILTER PLEAT PACK, AND AIR FILTER UNIT**

(57)   A provided air filter medium is an air filter medium including a porous fluorine resin membrane, the air filter medium further including: a collection layer; and an air-permeable adhesive layer. The collection layer, the air-permeable adhesive layer, and the porous fluorine resin membrane are placed in this order from upstream to downstream of the filter medium configured to allow an air flow to pass through the filter medium. An initial pressure drop of the filter medium at a permeate flow rate of 5.3 cm/sec is 250 Pa or less. When a test is performed in which polydisperse polyalphaolefin particles having a peak in number in a particle size range of 0.1 to 0.2 $\mu$m are allowed to pass through the filter medium at a concentration of 0.2 to 0.5 $g/m^3$ and a linear velocity of 5.3 cm/sec and a holding amount of the particles held by the filter medium and a variation of a pressure drop of the filter medium are evaluated, the holding amount is 43.0 $g/m^2$ or more from a moment when the holding amount reaches 20 $g/m^2$ to when a moment the pressure drop reaches $PD_1$ + 120 Pa, where $PD_1$ is the pressure drop of the filter medium at the moment when the holding amount reaches 20 $g/m^2$. This air filter medium has a reduced initial pressure drop and is suitable for use in an environment including liquid particles.

FIG.1

EP 4 218 983 A1

**Description**

TECHNICAL FIELD

The present invention relates to an air filter medium including a porous fluorine resin membrane, a filter pleat pack including the filter medium, and an air filter unit including the filter medium.

BACKGROUND ART

Because having a large number of fine pores and a high collection capability to collect particles such as dusts, porous fluorine resin membranes are included in various types of air filter mediums. Porous fluorine resin membranes generally function as surface filtration media that collect collection objects, i.e. objects to be collected, at their surface portions. Therefore, when used for collecting particles in air, for example, as a filter for outside air treatment or an air-intake filter for turbines, an air filter medium including a porous fluorine resin membrane is likely to experience a pressure drop increase due to clogging. In consideration of this, a prefilter is conventionally placed on the upstream side in a direction of an air flow that passes through a porous fluorine resin membrane. By having the prefilter collect some amount of a collection object having a relatively large particle size, clogging of the porous fluorine resin membrane located on the downstream side in the air flow direction can be reduced and the service life of the air filter medium can be increased. Patent Literature 1 discloses an exemplary air filter medium including a porous polytetrafluoroethylene (hereinafter referred to as "PTFE") membrane, which is a type of porous fluorine resin membrane, and a prefilter.

CITATION LIST

Patent Literature

Patent Literature 1: JP 2013-063424 A

SUMMARY OF INVENTION

Technical Problem

Air contains not only solid particles such as dust and salt particles but also, in some cases, nonvolatile liquid particles (hereinafter simply referred to as "liquid particles") such as oil mist. Studies by the present inventors have revealed that even an air filter medium including a prefilter tends to increase its pressure drop in a shorter period of time when used in an environment including liquid particles than when used in other environments and that this tendency is stronger for an air filter medium having an initial pressure reduced, for example, by thinning of a prefilter therein. For example, for stable control in various applications, such as use in outside air treatment apparatuses and turbines, of air filter mediums, it is desirable that a pressure drop increase in a short period of time be avoided particularly in a stage (main stage in a lifetime (service life) of an air filter medium) subsequent to an initial stage starting at the start of use of an air filter medium and ending at stabilization of properties of the air filter medium. Patent Literature 1 takes no account of this point.
The present invention aims to provide an air filter medium including a porous fluorine resin membrane, the air filter medium having a reduced initial pressure drop and being suitable for use in an environment including liquid particles such as oil mist.

Solution to Problem

The present invention provides an air filter medium including a porous fluorine resin membrane, the air filter medium further including:

a collection layer; and
an air-permeable adhesive layer, wherein
the collection layer, the air-permeable adhesive layer, and the porous fluorine resin membrane are placed in this order from upstream to downstream of the air filter medium configured to allow an air flow to pass through the air filter medium,
an initial pressure drop of the air filter medium at a permeate flow rate of 5.3 cm/sec is 250 Pa or less, and
when a test is performed in which polyalphaolefin particles are allowed to pass through the air filter medium at a concentration of 0.2 to 0.5 $g/m^3$ and a linear velocity of 5.3 cm/sec and a holding amount of the polyalphaolefin particles held by the air filter medium and a variation of a pressure drop of the air filter medium are evaluated, the holding amount is 43.0 g/m$^2$ or more from a moment when the holding amount reaches 20 g/m$^2$ to when a moment the pressure drop of the air filter medium reaches PD$_1$ + 120 Pa, where PD$_1$ is the pressure drop of the air filter medium at the moment when the holding amount reaches 20 g/m$^2$, the polyalphaolefin particles being polydisperse particles having a peak in number in a particle size range of 0.1 to 0.2 μm.

In another aspect, the present invention provides a filter pleat pack including an air filter medium folded into pleats, wherein
the air filter medium is the above air filter medium of the present invention.

In still another aspect, the present invention provides an air filter unit including an air filter medium, wherein the air filter medium is the above air filter medium of the present invention.

In still another aspect, the present invention provides an air filter unit including a filter pleat pack, wherein the filter pleat pack is the above filter pleat pack of the present invention.

Advantageous Effects of Invention

According to the studies by the present inventors, collection of liquid particles promotes a pressure drop increase in an air filter medium including a porous fluorine resin membrane and a prefilter through the following stages I and II. Incidentally, collection of solid particles hardly promotes a pressure drop increase in the stage II because many of collected solid particles stay in the prefilter.

Stage I: A pressure drop of the air filter medium increases by collection of liquid particles by the prefilter.
Stage II: The amount (a holding amount of liquid particles held by the prefilter) of liquid particles collected and held by the prefilter increases to a certain amount. Then, liquid particles start to fluidize toward the downstream porous fluorine resin membrane due to a pressure caused by an air flow passing through the air filter medium. The fluidized liquid particles reach the porous fluorine resin membrane, increasing the pressure drop of the air filter medium. The rate of pressure drop increase in the stage II is greater than that in the stage I because the rate depends on the degree of clogging of the porous fluorine resin membrane functioning as a main filter.

The air filter medium of the present invention can delay transition from the stage I to the stage II.

BRIEF DESCRIPTION OF DRAWINGS

FIG. 1 is a cross-sectional view schematically showing an example of the air filter medium of the present invention.
FIG. 2 is a cross-sectional view schematically showing another example of the air filter medium of the present invention.
FIG. 3 is a cross-sectional view schematically showing yet another example of the air filter medium of the present invention.
FIG. 4 is a cross-sectional view schematically showing yet another example of the air filter medium of the present invention.
FIG. 5 is a perspective view schematically showing an example of the filter pleat pack of the present invention.
FIG. 6 is a perspective view schematically showing an example of the air filter unit of the present invention.

DESCRIPTION OF EMBODIMENTS

Hereinafter, embodiments of the present invention will be described with reference to the drawings. The present invention is not limited to the following embodiments.

[Air filter medium]

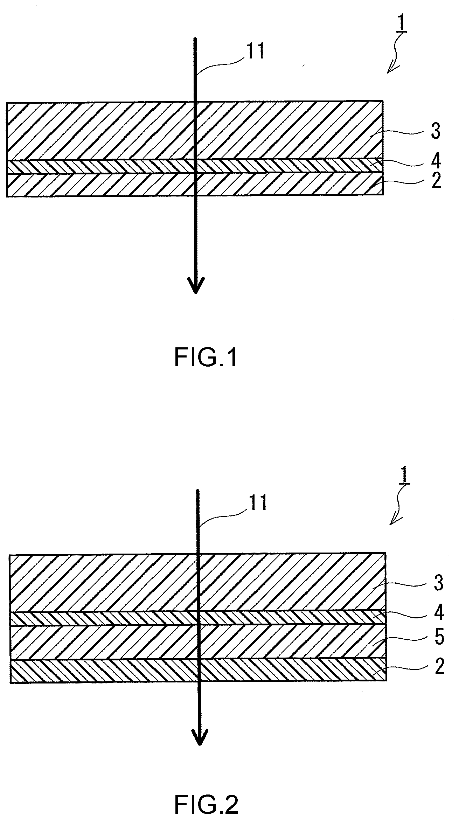

FIG. 1 shows an example of the air filter medium of the present embodiment. An air filter medium 1 of FIG. 1 is a filter medium including a porous fluorine resin membrane 2. The air filter medium 1 further includes a collection layer 3 and an air-permeable adhesive layer 4. The collection layer 3, the air-permeable adhesive layer 4, and the porous fluorine resin membrane 2 are placed in this order from upstream to downstream of the air filter medium 1 configured to allow an air flow 11 to pass through the air filter medium 1. In other words, the collection layer 3 and the air-permeable adhesive layer 4 are placed in this order from upstream on an upstream side in a direction of the air flow 11 with respect to the porous fluorine resin membrane 2. The air filter medium 1 of FIG. 1 includes one collection layer 3, one air-permeable adhesive layer 4, and one porous fluorine resin membrane 2.

An initial pressure drop $PD_0$ of the air filter medium 1 at a permeate flow rate of 5.3 cm/sec is 250 Pa or less. The pressure drop $PD_0$ may be 220 Pa or less, 200 Pa or less, 190 Pa or less, 180 Pa or less, 170 Pa or less, 160 Pa or less, 150 Pa or less, 140 Pa or less, 130 Pa or less, or even 120 Pa or less. The lower limit of the pressure drop $PD_0$ is, for example, 25 Pa or more.

A pressure drop PD of each of the air filter medium 1 and the layers included in the air filter medium 1 can be evaluated in the following manner. The filter medium or layer serving as an evaluation object is set in a circular holder with an effective area of 100 $cm^2$. The pressure drop is measured with a pressure meter (manometer) under conditions where air is allowed to pass through the set evaluation object and the linear velocity of the air passing through the evaluation object is adjusted to 5.3 cm/sec with the aid of a flow meter. It should be noted that for evaluation of the pressure drop PD of the air filter medium 1, the air is allowed to flow in a direction from the collection layer 3 toward the porous fluorine resin membrane 2. The pressure drop is measured eight times for one evaluation object, and the average of the eight values is defined as the pressure drop PD.

When a test (a test for a collection capability to collect liquid particles; hereinafter referred to as "capability test") is performed, for the air filter medium 1, in which polyalphaolefin (PAO) particles (hereinafter referred to as "polydisperse PAO particles") are allowed to pass through the air filter medium 1 at a concentration of 0.2 to 0.5 $g/m^3$ and a linear velocity of 5.3 cm/sec and a holding amount X of the PAO particles held by the air filter medium 1 and a variation of the pressure drop PD of the air filter medium 1 are evaluated, the holding amount X of the PAO particles is 43.0 $g/m^2$ or more from a moment when the holding amount reaches 20 $g/m^2$ to a moment when the pressure drop PD of the air filter medium 1 reaches $PD_1$ + 120 Pa, where $PD_1$ is the pressure drop of the air filter medium 1 at the moment when the holding amount reaches 20 $g/m^2$, the PAO particles being polydisperse particles having a peak in number in a particle size range of 0.1 to 0.2 $\mu$m. The holding amount X may be 43.5 $g/m^2$ or more, 44.0 $g/m^2$ or more, 45.0 $g/m^2$ or more, 46.0 $g/m^2$ or more, or even 47.0 $g/m^2$ or more. The upper limit of the holding amount X is, for example, 150 $g/m^2$ or less. According to the studies by the present inventors, generally, the air filter medium 1 can be considered in the stage subsequent to the initial stage when the holding amount reaches 20 $g/m^2$.

The capability test of the air filter medium 1 can be performed in the following manner. The air filter medium 1 serving as an evaluation object is set in a circular holder with an effective area of 100 $cm^2$. Air is allowed to pass through the set filter medium 1, and the linear velocity of the air passing through the filter medium 1 is adjusted to 5.3 cm/sec with the aid of a flow meter. It should be noted that the direction in which the air is allowed to flow is from the collection layer 3 toward the porous fluorine resin membrane 2. Then, polydisperse PAO particles are introduced in the air passing through the filter medium 1 such that the concentration of particles having a particle size of 0.1 to 0.2 $\mu$m is 0.2 to 0.5 $g/m^3$, and are collected by the filter medium 1. Measurement of the pressure drop PD of the filter medium 1 using a pressure meter (manometer) is then started. The linear velocity of the air passing through the filter medium 1 is maintained at 5.3 cm/sec during the measurement. The polydisperse PAO particles can be generated, for example, using a constant-output aerosol atomizer. The holding amount of the above particles at a particular moment after the start of the measurement can be calculated by determining a final holding amount (g) being the difference between a weight $W_0$ (g) of the filter medium 1 before the start of the measurement and a weight $W_1$ (g) of the filter medium 1 after the end of the measurement, dividing the final holding amount by a test duration (minutes), and multiplying the resulting value by a time period (minutes) from the start of the measurement to the particular moment. From the calculated holding amount and the pressure drop PD at the particular moment can be obtained a curve (typically, a curve where the x axis denotes the holding amount of the particles and the y axis denotes the pressure drop PD) showing a relation between the holding amount of the above particles held by the filter medium 1 and the pressure drop PD of the air filter medium 1. In the obtained curve, the pressure drop PD of the filter medium 1 at the moment when the holding amount reaches 20 $g/m^2$ is $PD_1$. The holding amount X can be determined by subtracting this holding amount 20 $g/m^2$ from the holding amount of the above particles at the moment when the pressure drop PD of the filter medium 1 reaches $PD_1$ + 120 Pa.

(Collection layer)

The collection layer 3 can function as a prefilter for collecting a portion of a collection object included in the air flow 11. The collection object includes liquid particles such as oil mist. The collection layer 3 generally functions as a depth filtration medium that collects the collection object inside the layer.

The collection layer 3 is, for example, formed of a fibrous material. The average fiber diameter of the fibrous material that can form the collection layer 3 is, for example, 5 $\mu$m or less, and may be 4.5 $\mu$m or less, 4 $\mu$m or less, 3.5 $\mu$m or less, 3 $\mu$m or less, 2.5 $\mu$m or less, or even 2.0 $\mu$m or less. The lower limit of the average fiber diameter is, for example, 0.1 $\mu$m or more. For the same grammage, the smaller the average fiber diameter is, the higher the collection capability of the collection layer 3 is. Herein, the average fiber diameter of a fibrous material is defined as an average of diameters of at least 20 fibers randomly selected in an enlarged image of a surface and/or cross-section of a layer formed of the fibrous material. The enlarged image is, for example, a microscope image obtained by a scanning electron microscope (SEM), a laser microscope, or the like. The enlarged image is, for example, at a magnification of about 100 to 500 times. The diameter of each selected fiber can be determined, for example, by image analysis as a fiber width in a direction perpendicular to a direction in which the fiber extends.

The average fiber diameter may be substantially uniform in a thickness direction of the collection layer 3. Herein, the average fiber diameter is considered substantially uniform even when a difference is 20% or less, preferably 10% or less. The difference is expressed by an expression $(D_{max} - D_{min})/D_{min}$), where, of a plurality of average fiber diameters D compared with each other, the smallest average fiber diameter is $D_{min}$ and the largest average fiber diameter is $D_{max}$.

The fibrous material that can form the collection layer 3 includes, for example, at least one fiber selected from a glass fiber, a resin fiber, and a metal fiber. Examples of the resin fiber include polyolefin fibers such as a polyethylene (PE) fiber and a polypropylene (PP) fiber, polyester fibers such as a polyethylene terephthalate (PET) fiber and a polyethylene naphthalate fiber, acrylic fibers such as an acrylonitrile fiber, and polyamide fibers including an aromatic polyamide fiber. The resin fiber may be a composite fiber of two or more resins. An example of the composite fiber is a fiber having a core-sheath structure composed of a core and a sheath covering the core. The melting point of the sheath may be lower than the melting point of the core. A specific example of the composite fiber is a fiber composed of a PET core and a PE sheath. The collection layer 3 may be a non-woven fabric formed of the resin fiber. Examples of the non-woven fabric include a melt-blown non-woven fabric and an electrospinning non-woven fabric. The non-woven fabric is preferably a melt-blown non-woven fabric because a melt-blown non-woven fabric can improve the collection capability of the collection layer 3. The collection layer 3 may be formed of the fibrous material including the glass fiber or may be a glass fiber layer. Using the collection layer 3 formed of the fibrous material including the glass fiber, occurrence of static electricity during manufacture and use of the air filter medium 1 is reduced, and consequently damage to the porous fluorine resin membrane 2 by static electricity can be reduced. Moreover, the collection layer 3 formed of the fibrous material including the glass fiber can have a higher collection capability than, for example, the collection layer 3 formed of the non-woven fabric formed of the resin fiber. The glass fiber layer may be a commercially-available glass fiber filter medium.

The glass fiber may have an average fiber diameter of 0.5 to 2.0 μm.

The collection layer 3 may include a material other than the above-described one. The material may be, for example, a binder for binding the fibers in the collection layer 3 formed of the fibrous material, and may be a binder for a glass fiber filter medium or a non-woven fabric. The binder is typically formed of a resin. Examples of the resin include an acrylic resin, a polyvinyl alcohol, and a polyethylene oxide.

A thickness of the collection layer 3 is, for example, 100 to 500 μm, and may be 200 to 450 μm, or even 300 to 400 μm.

A grammage (weight per unit area) of the collection layer 3 is, for example, 20 to 100 $g/m^2$, and may be 30 to 90 $g/m^2$, or even 40 to 80 $g/m^2$. The grammage may be substantially uniform in the thickness direction of the collection layer 3. Herein, the grammage is considered substantially uniform even when there is a difference as small as 5 $g/m^2$ or less, preferably 3 $g/m^2$ or less.

An initial pressure drop $PD_0$ of the collection layer 3 at a permeate flow rate of 5.3 cm/sec is, for example, 30 to 110 Pa, and may be 15 to 175 Pa.

A collection efficiency CE measured for the collection layer 3 using polydisperse PAO particles under conditions where the evaluation target particle size is 0.3 to 0.5 μm and the permeate flow rate is 5.3 cm/sec is, for example, 60 to 95%, and may be 40 to 99%.

The collection efficiency CE of each of the air filter medium 1 and the layers included in the air filter medium 1 can be evaluated in the following manner. The filter medium or layer serving as an evaluation object is set in a circular holder with an effective area of 100 $cm^2$. Air is allowed to pass through the set evaluation object, and the linear velocity of the air passing through the filter medium 1 is adjusted to 5.3 cm/sec with the aid of a flow meter. It should be noted that for evaluation of the collection efficiency CE of the air filter medium 1, the air is allowed to flow in the direction from the collection layer 3 toward the porous fluorine resin membrane 2. Then, PAO particles having a peak in number at a particle size of 0.3 μm are introduced in the air passing through the evaluation object such that the concentration of particles having a particle size of 0.3 μm is $4 \times 10^8$ particles/L or more. The above PAO particles can be generated, for example, using a constant-output aerosol atomizer. After that, the concentration of PAO particles included in the air having passed through the evaluation object is measured using a particle counter placed downstream of the holder, the PAO particles having a particle size of 0.3 μm. The collection efficiency CE of the evaluation object is calculated by the following equation (1). Both upstream and downstream particle concentrations in the equation (1) refer to the concentrations of particles having a particle size of 0.3 μm. The upstream particle concentration can be determined by allowing the above air in which the PAO particles are introduced to flow without setting the evaluation object in the holder and analyzing the air using the above particle counter.

$$\text{Collection efficiency CE} = [1 - (\text{downstream particle concentration})/(\text{upstream particle concentration})] \times 100\ (\%) \qquad (1)$$

The PF (performance factor) value determined for the collection layer 3 by the following equation (2) is, for example, 3 to 15, and may be 5 to 12, or even 10 to 12. The PF value of the collection layer 3 formed of the fibrous material including the glass fiber can be 10 or more. In the equation (2), PD represents an initial pressure drop, and CE represents a collection efficiency. It should be noted that the unit of the pressure drop PD in the equation (2) is $mmH_2O$.

$$\text{PF value} = \{-\log[(100 - CE)/100]/PD\} \times 100 \qquad (2)$$

In the air filter medium 1 of FIG. 1, the collection layer 3 forms one of exposed surfaces of the filter medium 1. The exposed surface is a surface through which the air flow 11 flows into the filter medium 1. As shown in the example of FIG. 1, the surface of the collection layer 3 may be the exposed surface (the surface through which the air flow 11 flows into the air filter medium 1) of the air filter medium 1.

(Air-permeable adhesive layer)

The air-permeable adhesive layer 4 is a layer formed of an adhesive. The air-permeable adhesive layer 4 can function as a layer that hinders movement of liquid particles once collected by the collection layer 3 to the porous fluorine resin membrane 2.

The grammage of the air-permeable adhesive layer 4 is, for example, 2 to 30 $g/m^2$. The lower limit of the grammage may be 4 $g/m^2$ or more, 5.5 $g/m^2$ or more, 6 $g/m^2$ or more, 7 $g/m^2$ or more, or even 8 $g/m^2$ or more. The upper limit of the grammage may be 25 $g/m^2$ or less, 24 $g/m^2$ or less, 20 $g/m^2$ or less, 18 $g/m^2$ or less, or even 16 $g/m^2$ or less. In the case of the air-permeable adhesive layer 4 having a grammage of 24 $g/m^2$ or less, particularly 20 $g/m^2$ or less, clogging of a downstream layer by fluidization of the air-permeable adhesive layer 4 in the initial stage of the use of the air filter medium 1 is reduced. This reduces an increase in the pressure drop PD of the air filter medium 1 in the initial stage. Moreover, this can achieve, for example, an increase of a later-described holding amount Y, which is determined taking into account an increase in the pressure drop PD in the initial stage.

Examples of the adhesive forming the air-permeable adhesive layer 4 include various adhesives such as rubber, acrylic, silicone, and urethane adhesives. The adhesive may be a hot-melt adhesive. More specific examples of the adhesive include a styrene-butadiene-styrene elastomer (SBS), a styrene-isoprene-styrene elastomer (SIS), an ethylene vinyl acetate (EVA), a polyolefin, and a polyamide. The adhesive is not limited to the above examples.

The air-permeable adhesive layer 4 may be a layer formed of a fibrous adhesive. Fibers of the fibrous adhesive may be randomly dispersed in an in-plane direction and a thickness direction of the layer. An average fiber diameter of the fibers of the fibrous adhesive is, for example, 10 to 30 $\mu$m, and may be 15 to 28 $\mu$m, or even 20 to 25 $\mu$m. The air-permeable adhesive layer 4 formed of the fibrous adhesive can be formed, for example, by spraying the adhesive on a layer to be in contact with the air-permeable adhesive layer 4 in the air filter medium 1. The air-permeable adhesive layer 4 formed of the fibrous adhesive may be formed by transferring the air-permeable adhesive layer 4 formed on a transfer film by spraying or the like to a layer to be in contact with the air-permeable adhesive layer 4 in the air filter medium 1.

The thickness of the air-permeable adhesive layer 4 is, for example, 5.5 to 16 $\mu$m, and may be 6 to 14 $\mu$m, or even 7 to 12 $\mu$m.

The air-permeable adhesive layer 4 of FIG. 1 may be a single layer. The air-permeable adhesive layer 4 may be a laminate composed of two or more identical or different layers.

The air-permeable adhesive layer 4 of FIG. 1 is in contact with the collection layer 3. An additional layer may be placed between the air-permeable adhesive layer 4 and the collection layer 3. However, the initial pressure drop $PD_0$ of the air filter medium 1 can be reduced more when the air-permeable adhesive layer 4 and the collection layer 3 are in contact with each other with no additional layer therebetween.

(Porous fluorine resin membrane)

The porous fluorine resin membrane 2 can function as a main filter of the air filter medium 1. The porous fluorine resin membrane 2 generally functions as a surface filtration medium that collects a collection object at its surface portion.

The porous fluorine resin membrane 2 is typically formed of countless fluorine resin fibrils, which are fine fibrous structures. The porous fluorine resin membrane may include a fluorine resin node connected to the fibril.

The porous fluorine resin membrane 2 is formed chiefly of a fluorine resin. Saying that the porous fluorine resin membrane 2 is formed chiefly of a fluorine resin means that the fluorine resin content is greatest of the contents of all components included in the porous fluorine resin membrane 2. The fluorine resin content in the porous fluorine resin membrane 2 is, for example, 50 weight% or more, and may be 60 weight% or more, 70 weight% or more, 80 weight% or more, 90 weight% or more, or even 95 weight% or more. The porous fluorine resin membrane 2 can include a filler in addition to the fluorine resin.

Examples of the fluorine resin include PTFE, an ethylene-tetrafluoroethylene-hexafluoropropylene copolymer (EFEP), a tetrafluoroethylene-hexafluoropropylene-vinylidene fluoride copolymer (THV), a tetrafluoroethylene-hexafluoropropylene copolymer (FEP), a tetrafluoroethylene-perfluoroalkoxyethylene copolymer (PFA), and an ethylene-tetrafluoroethylene copolymer (ETFE).

The porous fluorine resin membrane 2 may include two or more fluorine resins.

The porous fluorine resin membrane 2 may be a porous PTFE membrane.

The porous fluorine resin membrane 2 can be formed, for example, by molding a mixture of an unsintered fluorine resin powder and a liquid lubricant into a film by a method such as extrusion and/or rolling, removing the liquid lubricant from the obtained unsintered film, and then stretching the unsintered film. At any timing after the formation of the unsintered film, sintering may be performed in which the film is heated to a temperature equal to or higher than the melting point of the fluorine resin. Examples of the liquid lubricant include hydrocarbon oils such as naphtha, white oil, and liquid paraffin. However, the liquid lubricant is not limited as long as the liquid lubricant can wet the surfaces of the fluorine resin particles and be removed later. An example of the stretching is biaxial stretching that is a combination of stretching at a stretching ratio of 2 to 60 in an MD (longitudinal direction) of the unsintered film and a stretching temperature of 150 to 390°C and stretching at a stretching ratio of 10 to 60 in a TD (width direction) of the film and a stretching temperature of 40 to 150°C. However, the method for producing the porous fluorine resin membrane 2 is not limited as long as a collection capability suitable for the intended use of the air filter medium 1 is obtained.

The thickness of the porous fluorine resin membrane 2 is, for example, 1 to 100 $\mu$m, and may be 2 to 50 $\mu$m, or even 3 to 20 $\mu$m.

The porous fluorine resin membrane 2 has a porosity of, for example, 70 to 98%. The porosity can be measured in the following manner. The porous fluorine resin membrane 2 serving as an evaluation object is cut to given dimensions (for example, a 6-cm-diameter circle), and the volume and mass thereof are determined. The porosity can be calculated by substituting the volume and mass into the following equation (3). In the equation (3), V (unit: cm$^3$) represents the volume, W (unit: g) represents the mass, and D (unit: g/cm$^3$) represents the true density of the fluorine resin.

$$\text{Porosity (\%)} = 100 \times [V - (W/D)]/V \qquad (3)$$

The grammage of the porous fluorine resin membrane 2 is, for example, 0.05 to 10 g/m$^2$, and may be 0.1 to 5 g/m$^2$, or even 0.3 to 3 g/m$^2$.

The average fiber diameter (the average fiber diameter of the fibrils) of the porous fluorine resin membrane 2 is, for example, 0.2 $\mu$m or less, and the average fiber diameter may be 0.15 $\mu$m or less, or even 0.1 $\mu$m or less. The lower limit of the average fiber diameter is, for example, 0.05 $\mu$m or more, and may be 0.08 $\mu$m or more. The porous fluorine resin membrane 2 having a smaller average fiber diameter generally has a higher collection capability. The collection capability can be represented by the PF value, and a higher PF value means a higher collection capability.

The initial pressure drop $PD_0$ of the porous fluorine resin membrane 2 at a permeate flow rate of 5.3 cm/sec is, for example, 10 to 200 Pa, and may be 20 to 150 Pa, or even 30 to 100 Pa.

The collection efficiency CE measured for the porous fluorine resin membrane 2 using PAO particles having a peak in number at a particle size of 0.3 $\mu$m under conditions where the evaluation target particle size is 0.3 $\mu$m and the permeate flow rate is 5.3 cm/sec is, for example, 50 to 99.9%, and may be 60 to 99%, or even 70 to 98%.

The PF value determined for the porous fluorine resin membrane 2 by the above equation (2) is, for example, 20 or more, and may be 22 or more, 23 or more, 25 or more, 27 or more, 28 or more, or even 30 or more. The upper limit of the PF value is, for example, 40 or less, and may be 38 or less, 36 or less, or even 35 or less. The porous fluorine resin membrane 2 having an average fiber diameter of 0.05 $\mu$m or more and 0.1 $\mu$m or less can have a PF value of 25 to 40. The porous fluorine resin membrane 2 having an average fiber diameter of more than 0.1 $\mu$m and 0.2 $\mu$m or less can have a PF value of 20 to 25.

The porous fluorine resin membrane 2 of FIG. 1 is a single layer. The porous fluorine resin membrane 2 may be a laminate composed of two or more identical or different layers.

The porous fluorine resin membrane 2 of FIG. 1 is in contact with the air-permeable adhesive layer 4. An additional layer may be placed between the porous fluorine resin membrane 2 and the air-permeable adhesive layer 4.

The air filter medium 1 of FIG. 1 includes one porous fluorine resin membrane 2. However, the air filter medium 1 may include an additional porous fluorine resin membrane other than the porous fluorine resin membrane 2.

In the air filter medium 1 of FIG. 1, one outermost layer is the collection layer 3, and the other outermost layer is the porous fluorine resin membrane 2.

The air filter medium of the present invention may include an additional layer and/or member as long as the effects of the present invention can be achieved.

FIG. 2 shows an example of the air filter medium 1 including the additional layer. The air filter medium 1 of FIG. 2 further includes a first air-permeable supporting layer 5. The air-permeable supporting layer 5 is placed between the air-permeable adhesive layer 4 and the porous fluorine resin membrane 2. In the air filter medium 1 of FIG. 2, the collection layer 3, the air-permeable adhesive layer 4, the air-permeable supporting layer 5, and the porous fluorine resin membrane 2 are placed in this order from upstream to downstream of the air filter medium 1 configured to allow the air flow 11 to pass through the air filter medium 1. In other words, the collection layer 3, the air-permeable adhesive layer 4, and the air-permeable supporting layer 5 are placed in this order from upstream on the upstream side in the direction of the air flow 11 with respect to the porous fluorine resin membrane 2. The air filter medium 1 of FIG. 2 includes one collection layer 3, one air-permeable adhesive layer 4, one air-permeable supporting layer 5, and one porous fluorine resin membrane 2.

(First air-permeable supporting layer)

The first air-permeable supporting layer 5 can function as a layer supporting the porous fluorine resin membrane 2 from the upstream side in the direction of the air flow 11. The first air-permeable supporting layer 5 can function as a layer that hinders movement of liquid particles once collected by the collection layer 3 to the porous fluorine resin membrane 2. An embodiment in which the air filter medium 1 includes the air-permeable supporting layer 5 is particularly suitable for reducing, in the initial stage of the use of the filter medium 1, clogging of a surface of the porous fluorine resin membrane 2 with the air-permeable adhesive layer 4 that is fluidized.

The air-permeable supporting layer 5 is, for example, formed of a fibrous material. The average fiber diameter of the fibrous material that can form the air-permeable supporting layer 5 may be greater than the average fiber diameter of the fibrous material that can form the collection layer 3. In other words, the function of the air-permeable supporting layer 5 as a prefilter for collecting a portion of the collection object included in the air flow 11 may be lower than that of the collection layer 3.

The average fiber diameter of the fibrous material that can form the air-permeable supporting layer 5 may be more than 5 $\mu$m, 8 $\mu$m or more, 12 $\mu$m or more, 16 $\mu$m or more, or even 18 $\mu$m or more. The upper limit of the average fiber diameter is, for example, 50 $\mu$m or less, and may be 40 $\mu$m or less, 30 $\mu$m or less, or even 27 $\mu$m or less.

Examples of the fibrous material that can form the air-permeable supporting layer 5 are the same as the examples of the fibrous material that can form the collection layer 3. The air-permeable supporting layer 5 may be a non-woven fabric formed of a resin fiber. An example of the non-woven fabric is a spunbond non-woven fabric. The resin fiber may be a composite fiber having a core-sheath structure, such as a composite fiber composed of a PET core and a PE sheath. In this case, since PE strongly joins to the porous fluorine resin membrane 2, the air-permeable supporting layer 5 and the porous fluorine resin membrane 2 are more reliably joined together.

The air-permeable supporting layer 5 may include a material other than the above-described one. An example of the material is a binder for binding the fibers in the air-permeable supporting layer 5 formed of the fibrous material. Examples of the binder are the same as the examples of the binder the collection layer 3 can include.

The thickness of the air-permeable supporting layer 5 is, for example, 100 to 550 $\mu$m, and may be 150 to 450 $\mu$m, or even 200 to 350 $\mu$m.

The grammage of the air-permeable supporting layer 5 is, for example, 10 g/m$^2$ or more, and may be 15 g/m$^2$ or more, 20 g/m$^2$ or more, or even 30 g/m$^2$ or more. The upper limit of the grammage is, for example, 100 g/m$^2$ or less, and may be 70 g/m$^2$ or less.

The air-permeable supporting layer 5 is generally a layer having high air permeability in the thickness direction, compared to the porous fluorine resin membrane 2 and the collection layer 3. The initial pressure drop $PD_0$ of the air-permeable supporting layer 5 at a permeate flow rate of 5.3 cm/sec is, for example, 1 to 60 Pa, and may be 2 to 20 Pa, 2 to 10 Pa, or even 2 to 4 Pa.

The collection efficiency CE measured for the air-permeable supporting layer 5 using PAO particles having a peak in number at a particle size of 0.3 $\mu$m under conditions where the evaluation target particle size is 0.3 $\mu$m and the permeate flow rate is 5.3 cm/sec is, for example, 20% or less, and may be 10% or less. The lower limit of the collection efficiency CE is, for example, 1% or more, and may be 5% or more.

The air-permeable supporting layer 5 of FIG. 2 may be a single layer. The air-permeable supporting layer 5 may be a laminate composed of two or more identical or different layers.

The air-permeable supporting layer 5 of FIG. 2 is in contact with the air-permeable adhesive layer 4. An additional layer may be placed between the air-permeable supporting layer 5 and the air-permeable adhesive layer 4. However, the initial pressure drop $PD_0$ of the air filter medium 1 can be reduced more when the air-permeable supporting layer 5 and the air-permeable adhesive layer 4 are in contact with each other with no additional layer therebetween.

The air-permeable supporting layer 5 of FIG. 2 is in contact with the porous fluorine resin membrane 2. An additional layer may be placed between the porous fluorine resin membrane 2 and the air-permeable supporting layer 5. However, the initial pressure drop $PD_0$ of the air filter medium 1 can be reduced more when the air-permeable supporting layer 5 and the porous fluorine resin membrane 2 are in contact with each other with no additional layer therebetween.

In the air filter medium 1 of FIG. 2, one outermost layer is the collection layer 3, and the other outermost layer is the porous fluorine resin membrane 2.

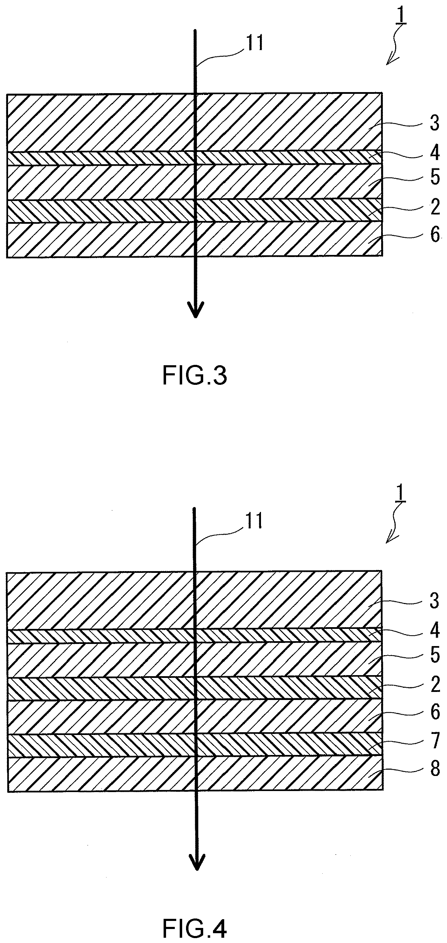

FIG. 3 shows another example of the air filter medium 1 including the additional layer. The air filter medium 1 of FIG. 3 has the same configuration as that of the air filter medium 1 of FIG. 2, except that the air filter medium 1 of FIG. 3 further includes a second air-permeable supporting layer 6. The air-permeable supporting layer 6 is placed on the downstream side in the direction of the air flow 11 with respect to the porous fluorine resin membrane 2. The air-permeable supporting layer 6 and the air-permeable supporting layer 5 sandwich the porous fluorine resin membrane 2. The air filter medium 1 of FIG. 3 includes one collection layer 3, one air-permeable adhesive layer 4, one air-permeable supporting layer 5, one porous fluorine resin membrane 2, and one air-permeable supporting layer 6.

(Second air-permeable supporting layer)

The second air-permeable supporting layer 6 can function as a layer supporting the porous fluorine resin membrane 2 from the downstream side in the direction of the air flow 11. The air-permeable supporting layer 6 is generally a layer having high air permeability in the thickness direction, compared to the porous fluorine resin membrane 2 and the collection layer 3.

The air-permeable supporting layer 6 is, for example, formed of a fibrous material. However, the air-permeable supporting layer 6 is not limited to a layer formed of a fibrous material as long as the air-permeable supporting layer 6 can support the porous fluorine resin membrane 2.

The air-permeable supporting layer 6 can have any combination of the configurations and/or the properties described above for the air-permeable supporting layer 5. The air-permeable supporting layer 6 may be identical to the air-permeable supporting layer 5.

The air-permeable supporting layer 6 of FIG. 3 is in contact with the porous fluorine resin membrane 2. An additional layer may be placed between the air-permeable supporting layer 6 and the porous fluorine resin membrane 2. However, the initial pressure drop $PD_0$ of the air filter medium 1 can be reduced more when the air-permeable supporting layer 6 and the porous fluorine resin membrane 2 are in contact with each other with no additional layer therebetween.

In the air filter medium 1 of FIG. 3, one outermost layer is the collection layer 3, and the other outermost layer is the air-permeable supporting layer 6.

FIG. 4 shows another example of the air filter medium 1 including the additional layer. The air filter medium 1 of FIG. 4 has the same configuration as that of the air filter medium 1 of FIG. 3, except that the air filter medium 1 of FIG. 4 further includes a second porous fluorine resin membrane 7 and a third air-permeable supporting layer 8. The porous fluorine resin membrane 7 is placed on the downstream side in the direction of the air flow 11 with respect to the porous fluorine resin membrane 2 and the air-permeable supporting layer 6. The air-permeable supporting layer 8 is placed on the downstream side in the direction of the air flow 11 with respect to the porous fluorine resin membrane 7. The air-permeable supporting layer 6 and the air-permeable supporting layer 8 sandwich the porous fluorine resin membrane 7. The air filter medium 1 of FIG. 4 includes one collection layer 3, one air-permeable adhesive layer 4, one air-permeable supporting layer 5, one porous fluorine resin membrane 2, one air-permeable supporting layer 6, one porous fluorine resin membrane 7, and one air-permeable supporting layer 8.

(Second porous fluorine resin membrane)

The second porous fluorine resin membrane 7, as well as the porous fluorine resin membrane 2, can function as a main filter of the air filter medium 1.

The porous fluorine resin membrane 7 can have any combination of the configurations and/or the properties described above for the porous fluorine resin membrane 2. The porous fluorine resin membrane 7 may be identical to the porous fluorine resin membrane 2. The porous fluorine resin membrane 7 may be a membrane having a lower air permeability (a larger pressure drop PD) and/or a higher collection efficiency CE than those of the porous fluorine resin membrane 2.

The porous fluorine resin membrane 7 of FIG. 4 is in contact with the air-permeable supporting layer 6. An additional layer may be placed between the porous fluorine resin membrane 7 and the air-permeable supporting layer 6. However, the initial pressure drop $PD_0$ of the air filter medium 1 can be reduced more when the porous fluorine resin membrane 7 and the air-permeable supporting layer 6 are in contact with each other with no additional layer therebetween.

(Third air-permeable supporting layer)

The third air-permeable supporting layer 8 can function as a layer supporting the porous fluorine resin membrane 7 from the downstream side in the direction of the air flow 11. The air-permeable supporting layer 8 can have any combination of the configurations and/or the properties described above for the air-permeable supporting layer 5. The air-permeable supporting layer 8 may be identical to the air-permeable supporting layer 5 and/or the air-permeable supporting layer 6.

The air-permeable supporting layer 8 of FIG. 4 is in contact with the porous fluorine resin membrane 7. An additional layer may be placed between the air-permeable supporting layer 8 and the porous fluorine resin membrane 7. However, the initial pressure drop $PD_0$ of the air filter medium 1 can be reduced more when the air-permeable supporting layer 8 and the porous fluorine resin membrane 7 are in contact with each other with no additional layer therebetween.

In the air filter medium 1 of FIG. 4, one outermost layer is the collection layer 3, and the other outermost layer is the air-permeable supporting layer 8.

The thickness of the air filter medium 1 is, for example, 200 to 1000 $\mu$m, and may be 300 to 900 $\mu$m, or even 400 to 800 $\mu$m.

The grammage of the air filter medium 1 is, for example, 60 to 200 g/m$^2$, and may be 80 to 180 g/m$^2$, or even 100 to 160 g/m$^2$.

The collection efficiency CE measured for the air filter medium 1 using PAO particles having a peak in number at a particle size of 0.3 $\mu$m under conditions where the evaluation target particle size is 0.3 $\mu$m and the permeate flow rate is 5.3 cm/sec is, for example, 85% or more, and may be 90% or more, 95% or more, 97% or more, 98% or more, 99% or more, or even 99.5% or more. The upper limit of the collection efficiency CE is, for example, 99.99% or less, and may be 99.9% or less.

The PF value determined for the air filter medium 1 by the above equation (2) is, for example, 15 or more, and may be 17 or more, 18 or more, 20 or more, 22 or more, 23 or more, 25 or more, 27 or more, or even 28 or more. The upper limit of the PF value is, for example, 40 or less, and may be 37 or less, 35 or less, 32 or less, or even 30 or less.

When the capability test is performed for the air filter medium 1, the holding amount Y of PAO particles (the polydisperse PAO particles for use in the capability test) from when the pressure drop PD of the air filter medium 1 is the initial value $PD_0$ to when the pressure drop PD of the air filter medium 1 reaches $PD_0$ + 250 Pa may be 50.0 g/m$^2$ or more, 60.0 g/m$^2$ or more, 65.0 g/m$^2$ or more, 70.0 g/m$^2$ or more, 75.0 g/m$^2$ or more, 78.0 g/m$^2$ or more, or even 80.0 g/m$^2$ or more. The upper limit of the holding amount Y is, for example, 200 g/m$^2$ or less.

A large holding amount Y means that the rate of increase in the pressure drop PD of the air filter medium 1 has been suppressed since the initial stage of the use of the air filter medium 1. Therefore, the air filter medium 1 whose holding amount Y is in the above range is particularly suitable for use in an environment including liquid particles and, for example, can extend a time period (service life) from the start of use to replacement. The criterion $PD_0$ + 250 Pa for the holding amount Y corresponds to a pressure drop at which replacement of an air filter medium is considered in general.

The holding amount Y can be determined from a curve (a curve showing the relation between the holding amount of the above particles held by the air filter medium 1 and the pressure drop PD of the air filter medium 1) obtained as described above through the capability test.

The layers in the air filter medium 1 are joined to each other. The porous fluorine resin membrane(s) and the air-permeable supporting layer(s) can be joined, for example, by thermal lamination or lamination using an adhesive. Joining by thermal lamination is preferred because, in that case, a pressure drop increase at a joining interface can be reduced. The porous fluorine resin membrane 2 or a laminate including the porous fluorine resin membrane 2 and the collection layer 3 are joined by the air-permeable adhesive layer 4. The air filter medium 1 can be produced by joining the porous fluorine resin membrane 2 or a laminate including the porous fluorine resin membrane 2 and the collection layer 3 by the air-permeable adhesive layer 4. However, the method for producing the air filter medium 1 is not limited to the above examples.

Since the air filter medium 1 reduces an increase in the pressure drop PD even in an environment including liquid particles, the air filter medium 1 is suitable for applications such as use as filters for outside air filtration, such as air-intake filters for turbines and filters for introducing outside air. However, the application of the air filter medium 1 is not limited to the above examples. The air filter medium 1 can be used in the same application as conventional air filter mediums.

The air filter medium 1 can be distributed, for example, in a sheet shape or a strip shape. The strip-shaped air filter medium 1 can be distributed in the form of a wound body wound around a winding core.

The air filter medium 1 can be used as a pleated filter pleat pack.

[Filter pleat pack]

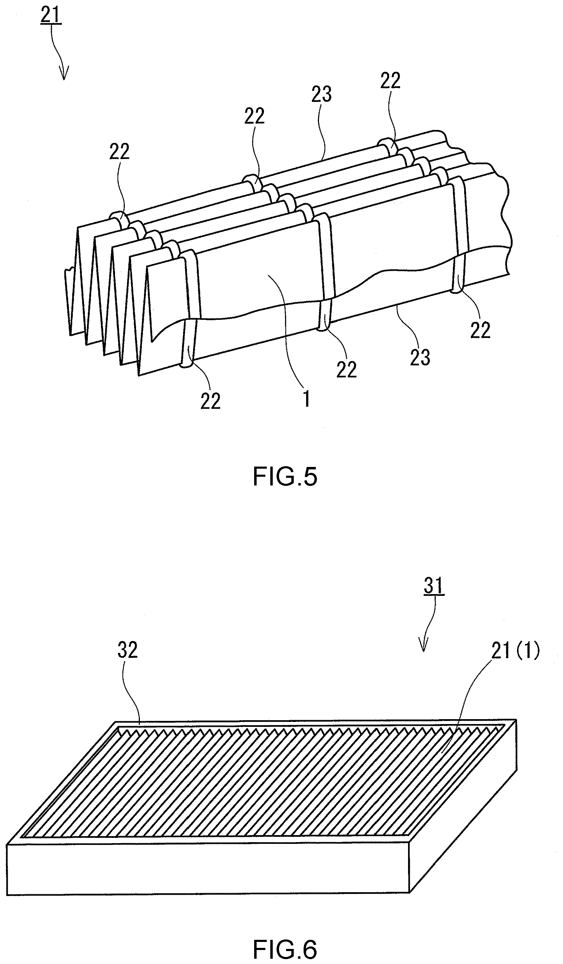

FIG. 5 shows an example of the filter pleat pack of the present embodiment. A filter pleat pack 21 shown in FIG. 5 includes the air filter medium 1 folded into pleats. The filter pleat pack 21 is formed by pleating the air filter medium 1. The air filter medium 1 is folded so as to have a continuous W-shape from a lateral view. By making the air filter medium 1 into the pleat pack 21 and incorporating the pleat pack 21 into an air filter unit, the filtration area of the air filter unit with respect to the ventilation area (the area of an opening of a frame) can be increased. Since including the air filter medium 1, the filter pleat pack 21 is suitable for use in an environment including liquid particles such as oil mist.

The filter pleat pack of the present invention may include an additional member in addition to the air filter medium 1. The filter pleat pack 21 shown in FIG. 5 further includes a string-shaped resin referred to as a bead 22. The bead 22 is a kind of spacer for maintaining the shape of the pleated air filter medium 1. The bead 22 of FIG. 5 is placed on a surface of the folded air filter medium 1 to extend along a direction intersecting with pleat line(s) 23 (a mountain fold and/or a valley fold) of the air filter medium 1. However, the shape and the arrangement of the bead 22 are not limited to the above example. The bead 22 of FIG. 5 is placed on each of two surfaces of the air filter medium 1, but the bead 22 may be placed on one of the surfaces of the air filter medium 1. It is preferred that the bead 22 be placed not on the porous fluorine resin membrane 2 but on the collection layer 3 and/or the air-permeable supporting layer 6 or 8. When a placement surface where the bead 22 is placed is viewed in plan, the filter pleat pack 21 may include a plurality of beads 22 placed in parallel to each other at a given interval in a direction in which the pleat line 23 extends. In the example of FIG. 5, at least three beads 22 are placed on each placement surface. The bead 22 can be formed by applying a molten resin in a string shape. Examples of the resin include polyamides and polyolefins.

Pleating of the air filter medium 1 can be performed using a known technique, such as a reciprocating processing machine or a rotary processing machine.

[Air filter unit]

FIG. 6 shows an example of the air filter unit of the present embodiment. An air filter unit 31 shown in FIG. 6 includes the filter pleat pack 21 and a frame 32 supporting the filter pleat pack 21. In the air filter unit 31, a peripheral portion of the filter pleat pack 21 is supported by the frame (support frame) 32. The frame 32 is formed of, for example, a metal, a resin, or a composite material thereof. In the case where the frame 32 is formed of a resin, the filter pleat pack 21 can be fixed to the frame 32 at the time of formation of the frame 32. The configuration of the frame 32 may be the same as the configuration of a frame included in a conventional air filter unit. Since including the air filter medium 1, the air filter unit 31 is suitable for reducing a pressure drop increase even in an environment including liquid particles such as oil mist.

The air filter unit 31 of FIG. 6 includes the air filter medium 1 as the filter pleat pack 21. The configuration of the air filter unit of the present invention is not limited to the above example as long as the air filter unit includes the air filter medium 1.

EXAMPLES

The present invention will be described more specifically by way of examples. The present invention is not limited to embodiments shown in the following examples.

Methods for evaluating air filter mediums produced in the examples and layers included in the filter mediums will be described.

[Holding amounts X and Y of air filter medium]

Holding amounts X and Y of the air filter mediums were evaluated by the above capability test. The polydisperse PAO particles used in the evaluation were PAO (Durasyn 164) manufactured by INEOS, and were generated using a constant-output aerosol atomizer (TSI No. 3076 manufactured by TOKYO DYLEC CORP.). It should be noted that the polydisperse PAO particles were single peak particles having a peak in number only in the particle size range of 0.1 to 0.2 $\mu$m.

[Collection efficiency CE]

Collection efficiencies CE of the porous PTFE membranes, collection layers, air-permeable supporting layers, and the air filter mediums were evaluated by the above method. In the case where the evaluation object was one of the air filter mediums, the air flow was generated in such a direction that the air flow passed through the filter medium from the upstream side to the downstream side shown in Tables 1 and 2. The PAO particles used in the evaluation were obtained by generating polydisperse PAO particles using PAO (Durasyn 164) manufactured by INEOS and a constant-output aerosol atomizer (TSI No. 3076 manufactured by TOKYO DYLEC CORP.), classifying the polydisperse PAO particles using a mobility analyzer (TSI No. 3080 manufactured by TOKYO DYLEC CORP.), and selectively collecting particles having a peak in number at a particle size of 0.3 $\mu$m

[Initial pressure drop $PD_0$]

Initial pressure drops $PD_0$ of the porous PTFE membranes, the collection layers, the air-permeable supporting layers, and the air filter mediums were evaluated by the above method. In the case where the evaluation object was one of the air filter mediums, the air flow was generated in such a direction that the air flow passed through the filter medium from the upstream side to the downstream side shown in Tables 1 and 2.

[PF value]

PF values of the porous PTFE membranes and the air filter mediums were determined by the following equation (2) from the collection efficiencies CE and the initial pressure drops PD determined in the above manner. It should be noted that the pressure drop PD in the equation (2) is a converted value converted in the unit $mmH_2O$.

$$PF \text{ value} = \{-\log[(100 - CE)/100]/PD\} \times 100 \qquad (2)$$

[Production of porous PTFE membrane A]

An amount of 100 parts by weight of a fine PTFE powder (POLYFLON PTFE F-104 manufactured by DAIKIN INDUSTRIES, LTD.) and 20 parts by weight of dodecane serving as a liquid lubricant were uniformly mixed to obtain a mixture. Next, the mixture was extruded into a sheet shape using an extruder to obtain a strip-shaped PTFE sheet (thickness: 1.5 mm; width: 20 cm). Then, the obtained PTFE sheet was rolled using a pair of metal pressure rolls. During the rolling, the PTFE sheet was pulled in the longitudinal direction by another roll placed downstream of the pressure rolls so that the width of the PTFE sheet would be the same before and after the rolling. The rolled PTFE sheet had a thickness of 200 $\mu$m.
Next, the PTFE sheet was held in an atmosphere at 150°C to remove the liquid lubricant. After that, the PTFE sheet was stretched by roll stretching in the longitudinal direction at a stretching temperature of 300°C and a stretching ratio of 25 and was then stretched by tenter stretching in the width direction at a stretching temperature of 100°C and a stretching ratio of 30 to obtain an unsintered porous PTFE membrane. Then, the obtained porous membrane was sintered at 400°C in a hot-air furnace to obtain a strip-shaped porous PTFE membrane A. The obtained porous PTFE membrane A has a thickness of 5 $\mu$m, an initial pressure drop $PD_0$ of 70 Pa, a collection efficiency of 99.1%, and a PF value of 22.4.

[Preparation of collection layer B]

A glass fiber filter medium (Microfine H750 manufactured by Hokuetsu Paper Mills, Ltd.) was prepared as a collection layer B. The collection layer B has a thickness of 380 $\mu$m, a grammage of 63 g/m$^2$, an initial pressure drop $PD_0$ of 50 Pa, and a collection efficiency of 70%, and the glass fiber forming the collection layer B has an average fiber diameter of 0.88 $\mu$m.

[Preparation of air-permeable supporting layer C]

A spunbond non-woven fabric (ELEVES S0303WDO manufactured by UNITIKA LTD.) formed of a PET-PE composite fiber was prepared as an air-permeable supporting layer C. This PET-PE composite fiber has a core-sheath structure composed of a PET core and a PE sheath. The air-permeable supporting layer C has a thickness of 220 $\mu$m, a grammage of 30 g/m$^2$, an initial pressure drop $PD_0$ of 3 Pa, and a collection efficiency of 7%, and the composite fiber forming the air-permeable supporting layer C has an average fiber diameter of 25 $\mu$m.

(Example 1)

The porous PTFE membrane A and a pair of the air-permeable supporting layers C were stacked in such a manner that the air-permeable supporting layers C sandwiched the porous PTFE membrane A. The resulting body as a whole was subjected to thermal lamination at 160°C to obtain a laminate having a three-layer structure composed of "air-permeable supporting layer C/porous PTFE membrane A/air-permeable supporting layer C". Next, the obtained laminate and the collection layer B were joined to each other by an air-permeable adhesive layer (grammage: 4 g/m$^2$) to obtain an air filter medium of Example 1. The joining was performed by press lamination of the collection layer B to a surface obtained by spraying a hot-melt synthetic rubber adhesive (MORESCO-MELT TN-286Z manufactured by MORESCO Corporation) on one of the exposed surfaces formed of the air-permeable supporting layers C of the laminate so that the grammage would be 4 g/m$^2$. Before the collection layer B was joined to the air-permeable adhesive layer, the air-permeable adhesive layer was observed with an optical microscope to confirm that the air-permeable adhesive layer was formed of the above fibrous adhesive (average fiber diameter: 21 μm). A pair of rolls were used in the thermal lamination and the press lamination (the same applies to Examples and Comparative Examples below). The obtained air filter medium was evaluated for the properties in a state where the collection layer B was on the upstream side.

(Example 2)

An air filter medium of Example 2 was obtained in the same manner as in Example 1, except that the grammage of the air-permeable adhesive layer was changed to 8 g/m$^2$. The obtained air filter medium was evaluated for the properties in a state where the collection layer B was on the upstream side.

(Example 3)

An air filter medium of Example 3 was obtained in the same manner as in Example 1, except that the grammage of the air-permeable adhesive layer was changed to 16 g/m$^2$. The obtained air filter medium was evaluated for the properties in a state where the collection layer B was on the upstream side.

(Example 4)

An air filter medium of Example 4 was obtained in the same manner as in Example 1, except that the grammage of the air-permeable adhesive layer was changed to 24 g/m$^2$. The obtained air filter medium was evaluated for the properties in a state where the collection layer B was on the upstream side.

(Example 5)

The porous PTFE membrane A and the air-permeable supporting layer C were stacked, and the resulting body as a whole was subjected to thermal lamination at 160°C to obtain a laminate having a double-layer structure composed of "porous PTFE membrane A/air-permeable supporting layer C". Next, the obtained laminate and the collection layer B were joined to each other by an air-permeable adhesive layer (grammage: 8 g/m$^2$) to obtain an air filter medium of Example 5. The joining was performed by press lamination of the collection layer B to a surface obtained by spraying a hot-melt synthetic rubber adhesive (MORESCO-MELT TN-286Z manufactured by MORESCO Corporation) on the exposed surface formed of the porous PTFE membrane A of the laminate so that the grammage would be 8 g/m$^2$. The obtained air filter medium was evaluated for the properties in a state where the collection layer B was on the upstream side.

(Comparative Example 1)

A laminate having a three-layer structure composed of "air-permeable supporting layer C/porous PTFE membrane A/air-permeable supporting layer C" was obtained in the same manner as in Example 1. Next, the obtained laminate and the collection layer B were stacked to obtain an air filter medium of Comparative Example 1. The stacking was performed such that one of the air-permeable supporting layers C and the collection layer B were in contact with each other. The obtained air filter medium was evaluated for the properties in a state where the collection layer B was on the upstream side.

(Comparative Example 2)

A laminate having a double-layer structure composed of "porous PTFE membrane A/air-permeable supporting layer C" was obtained in the same manner as in Example 5. Next, the obtained laminate and the collection layer B were stacked to obtain an air filter medium of Comparative Example 2. The stacking was performed such that the porous PTFE membrane A and the collection layer B were in contact with each other. The obtained air filter medium was evaluated for the properties in a state where the collection layer B was on the upstream side.

Tables 1 and 2 below show configurations and properties of the air filter mediums of Examples and Comparative Examples.

[Table 1]

|  |  |  | Example 1 | Example 2 | Example 3 | Example 4 | Example 5 |
|---|---|---|---|---|---|---|---|
| ↑ Upstream side | Collection layer | No. | B | B | B | B | B |
|  | Air-permeable adhesive layer | Grammage (g/m$^2$) | 4 | 8 | 16 | 24 | 8 |
|  | Air-permeable supporting layer | No. | C | C | C | C |  |
| Downstream side ↓ | Porous PTFE membrane | No. | A | A | A | A | A |
|  | Air-permeable supporting layer | No. | C | C | C | C | C |
| Properties | Collection efficiency (%) |  | 99.96 | 99.96 | 99.96 | 99.96 | 99.96 |
|  | Initial pressure drop (Pa) |  | 111 | 123 | 146 | 183 | 192 |
|  | PF value |  | 30.0 | 28.5 | 22.8 | 18.2 | 17.3 |
|  | Holding amount X (g/m$^2$) |  | 43.6 | 43.9 | 45.2 | 45.0 | 47.0 |

[Table 2]

|  |  |  | Comparative Example 1 | Comparative Example 2 |
|---|---|---|---|---|
| T Upstream side | Collection layer | No. | B | B |
|  | Air-permeable adhesive layer | Grammage (g/m$^2$) |  |  |
|  | Air-permeable supporting layer | No. | C |  |
| Downstream side ↓ | Porous PTFE membrane | No. | A | A |
|  | Air-permeable supporting layer | No. | C | C |
| Properties | Collection efficiency (%) |  | 99.96 | 99.96 |
|  | Initial pressure drop (Pa) |  | 106 | 110 |
|  | PF value |  | 31.4 | 30.3 |
|  | Holding amount X (g/m$^2$) |  | 42.0 | 38.5 |

Table 3 below shows the results of the evaluation for the holding amounts Y of the air filter mediums of Examples 1 to 4 having the same configurations except for the grammages of the air-permeable adhesive layers.

[Table 3]

| | Example 1 | Example 2 | Example 3 | Example 4 |
|---|---|---|---|---|
| Holding amount Y (g/m²) | 78.3 | 78.6 | 80.2 | 78.5 |

INDUSTRIAL APPLICABILITY

The air filter medium of the present invention can be used in the same applications as conventional air filter mediums. Examples of the applications include air filter mediums, filter pleat packs, and air filter units used as air-intake filters for outside air treatment and air-intake filters of turbines.

**Claims**

1. An air filter medium comprising a porous fluorine resin membrane, the air filter medium further comprising:

   a collection layer; and
   an air-permeable adhesive layer, wherein
   the collection layer, the air-permeable adhesive layer, and the porous fluorine resin membrane are placed in this order from upstream to downstream of the air filter medium configured to allow an air flow to pass through the air filter medium,
   an initial pressure drop of the air filter medium at a permeate flow rate of 5.3 cm/sec is 250 Pa or less, and
   when a test is performed in which polyalphaolefin particles are allowed to pass through the air filter medium at a concentration of 0.2 to 0.5 g/m³ and a linear velocity of 5.3 cm/sec and a holding amount of the polyalphaolefin particles held by the air filter medium and a variation of a pressure drop of the air filter medium are evaluated, the holding amount is 43.0 g/m² or more from a moment when the holding amount reaches 20 g/m² to a moment when the pressure drop of the air filter medium reaches $PD_1$ + 120 Pa, where $PD_1$ is the pressure drop of the air filter medium at the moment when the holding amount reaches 20 g/m², the polyalphaolefin particles being polydisperse particles having a peak in number in a particle size range of 0.1 to 0.2 μm.

2. The air filter medium according to claim 1, wherein the air-permeable adhesive layer has a grammage of 4 g/m² or more.

3. The air filter medium according to claim 2, wherein the air-permeable adhesive layer has a grammage of 5.5 g/m² or more.

4. The air filter medium according to any one of claims 1 to 3, wherein the air-permeable adhesive layer has a grammage of 16 g/m² or less.

5. The air filter medium according to any one of claims 1 to 4, further comprising a first air-permeable supporting layer placed between the air-permeable adhesive layer and the porous fluorine resin membrane.

6. The air filter medium according to any one of claims 1 to 5, further comprising a second air-permeable supporting layer placed on a downstream side in a direction of the air flow with respect to the porous fluorine resin membrane.

7. The air filter medium according to any one of claims 1 to 6, wherein the porous fluorine resin membrane is a porous polytetrafluoroethylene membrane.

8. The air filter medium according to any one of claims 1 to 7, wherein the collection layer is formed of a fibrous material including a glass fiber.

9. The air filter medium according to any one of claims 1 to 8, wherein when the test is performed, the holding amount is 50.0 g/m² or more from when the pressure drop of the air filter medium is an initial value $PD_0$ to when the pressure drop of the air filter medium reaches $PD_0$ + 250 Pa.

10. A filter pleat pack comprising an air filter medium folded into pleats, wherein
    the air filter medium is the air filter medium according to any one of claims 1 to 9.

11. An air filter unit comprising an air filter medium, wherein
the air filter medium is the air filter medium according to any one of claims 1 to 9.

12. An air filter unit comprising a filter pleat pack, wherein
the filter pleat pack is the filter pleat pack according to claim 10.

FIG.1

FIG.2

FIG.3

FIG.4

FIG.5

FIG.6

## INTERNATIONAL SEARCH REPORT

International application No.

**PCT/JP2021/035724**

| | |
|---|---|
| **A.** | **CLASSIFICATION OF SUBJECT MATTER** |

*B01D 39/16*(2006.01)i; *B01D 63/14*(2006.01)i; *B01D 69/00*(2006.01)i; *B01D 71/36*(2006.01)i; *D04H 1/4218*(2012.01)i
FI:   B01D39/16 C; B01D39/16 E; B01D63/14; B01D69/00; B01D71/36; D04H1/4218

According to International Patent Classification (IPC) or to both national classification and IPC

| | |
|---|---|
| **B.** | **FIELDS SEARCHED** |

Minimum documentation searched (classification system followed by classification symbols)

B01D39/16; B01D63/14; B01D69/00; B01D71/36; D04H1/4218

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2013-94717 A (NITTO DENKO CORP.) 20 May 2013 (2013-05-20)<br>claims 1, 9, paragraphs [0007], [0070] | 1-12 |
| Y | JP 8-309123 A (TOYO BOSEKI KABUSHIKI KAISHA) 26 November 1996 (1996-11-26)<br>claim 1, paragraph [0004], examples 2, 3 | 1-12 |
| Y | JP 8-103612 A (NITTO DENKO CORP.) 23 April 1996 (1996-04-23)<br>claim 1, paragraphs [0004], [0006], example 1 | 1-12 |
| Y | JP 2019-58903 A (NITTO DENKO CORP.) 18 April 2019 (2019-04-18)<br>claim 2 | 1-12 |
| Y | WO 2020/067182 A1 (DAIKIN INDUSTRIES, LTD.) 02 April 2020 (2020-04-02)<br>claim 4 | 1-12 |
| Y | JP 2017-159281 A (DAIKIN INDUSTRIES, LTD.) 14 September 2017 (2017-09-14)<br>claims 1-2, 6-7 | 8 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/035724**

| Patent document cited in search report | | | Publication date (day/month/year) | Patent family member(s) | | Publication date (day/month/year) |
|---|---|---|---|---|---|---|
| JP | 2013-94717 | A | 20 May 2013 | (Family: none) | | |
| JP | 8-309123 | A | 26 November 1996 | (Family: none) | | |
| JP | 8-103612 | A | 23 April 1996 | (Family: none) | | |
| JP | 2019-58903 | A | 18 April 2019 | US 2020/0230536 claim 2 EP 3685900 CN 111148561 KR 10-2020-0055061 | A1 A1 A A | |
| WO | 2020/067182 | A1 | 02 April 2020 | (Family: none) | | |
| JP | 2017-159281 | A | 14 September 2017 | US 2019/0344204 claims 1-2, 6-7 EP 3427808 CN 108778453 | A1 A1 A | |

Form PCT/ISA/210 (patent family annex) (January 2015)

**EP 4 218 983 A1**

## REFERENCES CITED IN THE DESCRIPTION

### Patent documents cited in the description

- JP 2013063424 A